# EUROPÄISCHE PATENTSCHRIFT

(11) **EP 2 024 279 B1**
(45) Veröffentlichungstag und Bekanntmachung des Hinweises auf die Patenterteilung: **23.03.2011**
(21) Anmeldenummer: 07725010.8
(22) Anmeldetag: 09.05.2007
(51) Int. Cl.: C01B 7/04, C01B 7/07

(54) **VERFAHREN ZUR ABTRENNUNG VON CHLOR AUS DEM PRODUKTGAS EINES HCI-OXIDATIONSPROZESSES**
METHOD FOR SEPARATING CHLORINE FROM THE PRODUCT GAS FROM AN HCI OXIDATION PROCESS
PROCÉDÉ DE SÉPARATION DU CHLORE CONTENU DANS LE GAZ PRODUIT AU COURS D'UN PROCESSUS D'OXYDATION DE CHLORURE D'HYDROGÈNE

(30) Priorität: 19.05.2006 DE 102006023581
(43) Veröffentlichungstag der Anmeldung: 18.02.2009
(73) Patentinhaber: Bayer MaterialScience AG, 51368 Leverkusen (DE)
(72) Erfinder: KÄMPER, Friedhelm, 47807 Krefeld (DE)
(86) Internationale Anmeldenummer: PCT/EP2007/004087
(87) Internationale Veröffentlichungsnummer: WO 2007/134716

(56) Entgegenhaltungen:
- EP-A- 0 233 773
- EP-A- 0 518 553
- DE-A1- 2 426 056
- US-A- 5 254 323
- US-B1- 6 387 345

## Beschreibung

Die Erfindung betrifft ein Verfahren zur selektiven Abtrennung von Chlor aus dem Produktgas eines ggf. katalysatorgestützten HCl-Oxidationsprozesses mittels Sauerstoff, das neben Chlor noch wenigstens Überschuss-Sauerstoff, chemisch inerte Bestandteile, insbesondere Kohlendioxid und Edelgase, und gegebenenfalls HCl enthält, mittels Destillation und Rückführung des von Chlor befreiten Sauerstoffstroms zum HCl-Oxidationsprozess.

Bei vielen großtechnischen chemischen Prozessen wie der Herstellung von Isocyanaten, insbesondere MDI und TDI, sowie bei Chlorierverfahren von organischen Stoffen wird Chlor als Rohstoff eingesetzt, wobei als Nebenprodukt in der Regel ein HCl-Gastrom anfällt. Dieses HCl-Gas ist häufig mit verfahrensspezifischen organischen und anorganischen Stoffen verunreinigt. Speziell für das HCl-Gas aus Isocyanat-Herstellungsanlagen sind als Verunreinigungen bekannt:

Ein Überschuss von Kohlenmonoxid aus der Phosgenherstellung, Spuren von Phosgen, Spuren von Lösemitteln (z.B. Toluol, Monochlorbenzol oder Dichlorbenzol), Spuren von niedrig siedenden halogenierten Kohlenwasserstoffenund und chemisch inerte Bestandteile wie Stickstoff, Kohlendioxid oder Edelgase.

Für die Produktion von Chlor und die Verwertung der als Zwangsanfall in einem Isocyanat-Produktionsprozess anfallenden Salzsäure werden hier beispielhaft die folgenden verschiedenen großtechnischen Verfahren erwähnt:
1. Die Produktion von Chlor in NaCl-Elektrolysen und Verwertung von HCl entweder durch Verkauf oder durch Weiterverarbeitung in Oxychlorierungsprozessen, z.B. bei der Herstellung von Vinylchlorid.
2. Die Umwandlung von HCl zu Chlor durch Elektrolyse von wässriger HCl mit Diaphragmen oder Membranen als Trennmedium zwischen Anoden- und Kathodenraum. Das Koppelprodukt ist hierbei Wasserstoff.
3. Die Umwandlung von HCl zu Chlor durch Elektrolyse von wässriger HCl in Gegenwart von Sauerstoff in Elektrolysezellen mit Sauerstoff-Verzehr-Kathode (ODC, Oxygen Depletion Cathode). Das Koppelprodukt ist hierbei Wasser.
4. Die Umwandlung von HCl-Gas zu Chlor durch Gasphasenoxidation von HCl mit Sauerstoff bei erhöhten Temperaturen an einem Katalysator. Das Koppelprodukt ist hierbei ebenfalls Wasser. Dieses Verfahren ist als "Deacon Verfahren" seit über einem Jahrhundert bekannt und in Benutzung.

All diese Verfahren haben abhängig von den Marktbedingungen der Koppelprodukte (z.B. Natronlauge, Wasserstoff, Vinylchlorid im Fall 1.), von den Randbedingungen am jeweiligen Standort (z.B. Energiepreise, Integration in eine Chlorinfrastruktur), und vom Investitions- und Betriebskostenaufwand unterschiedlich große Vorteile für die Isocyanatherstellung. Von größer werdender Bedeutung ist das letztgenannte Deacon-Verfahren.

Bei Deacon-Prozessen stellt sich das Problem, dass sich im Reaktor ein chemisches Gleichgewicht zwischen HCl, Chlor und Sauerstoff einstellt, welches in Abhängigkeit von Druck, Temperatur, Sauerstoff-Überschuss, Verweilzeit und anderen Parametern nur einen HCl-Umsatz von üblicherweise etwa 70 - 90 % zulässt, d.h. das Prozessgas enthält neben dem Zielprodukt Chlor signifikante Anteile nicht umgesetzter HCl und signifikante Mengen des im Überschuss eingesetzten Sauerstoffs.

Die Aufarbeitung dieses Prozessgases ist ein zentrales Problem von Deacon Prozessen. Aufgabe ist es, das Zielprodukt Chlor selektiv aus dem Prozessgas, welches nur ca. 30 - 50 Vol.-% Chlor enthält, zu entfernen und für einen Wiedereinsatz z.B. in einer Isocyanatherstellung bereitzustellen sowie das möglichst chlorfreie Restgas wieder auf den Deacon Reaktor zu rezyklisieren.

Die üblichen Verfahren zur Chlorverflüssigung unter Druck (s. Ullmanns Encyclopedia of Industrial Chemistry, Chlorine, Wiley VCH Verlag 2006, (DOI: 10.1002/14356007.a06_399.pub2) erzeugen jedoch ein chlorhaltiges Restgas, welches nur unter extremen Tieftemperaturbedingungen ausreichend chlorfrei erhalten werden kann. Ein Teil des chlorhaltigen Restgases der Verflüssigung muss aus dem Gaskreislauf des Deacon Prozesses ausgeschleust werden, um die Anreicherung von inerten Bestandteilen im Kreislauf zu vermeiden. Die Abgaswäsche dieses ausgeschleusten, chlorhaltigen Restgases muss dann üblicherweise mit Natronlauge oder Na₂SO₃ durchgeführt werden (vgl. hierzu EP 0 406 675 A1), ein Verfahren, das zu unerwünschtem zusätzlichen Rohstoffverbrauch und unerwünschten Salzmengen im Abwasser führt.

In dem als "Shell Deacon Prozess" bekannt gewordenen Verfahren (siehe The Chemical Engineer, (1963), S. 224-232) wird Chlor aus Reaktionsgasen von Deacon Prozessen durch Absorptions-/Desorptionsschritte mit Hilfe von Tetrachlorkohlenstoff (CCl₄) in reiner Form gewonnen.

In der DE 195 36 976 A1 wird ebenfalls vorgeschlagen, Chlor aus dem Prozessgas durch eine Absorption in Tetrachlorkohlenstoff (CCl₄) oder anderen Lösungsmitteln zu entfernen und aus dem chlorhaltigen Lösungsmittel das Chlor in einem weiteren Desorptionschritt wiederzugewinnen.

Die Absorption von Chlor in CCl₄ in Anwesenheit der übrigen Komponenten eines Deacon-Reaktionsgases ist allerdings nicht sehr selektiv und erfordert zudem zusätzliche Reinigungsschritte. Außerdem unterliegt CCl₄ wegen seines hohen Ozon-Zersetzungspotentials restriktiven weltweiten Verwendungsbeschränkungen zum Atmosphärenschutz.

Problematisch ist an diesem Verfahren außerdem, das Recyclegas ausreichend frei von CCl₄ zu erhalten, um negative Auswirkungen auf den Deacon Reaktor und den Deacon Katalysator zu vermeiden und auf zusätzliche Reinigungsschritte in der Purgegaswäsche zu verzichten.

In der deutschen Offenlegungsschrift 2426056 wird auf die Probematiken der selektiven destillativen Chlorentfernung aus einem chlorhaltigen Prozessgas, welches außerdem noch CO2 und Luft enthält, eingegangen. Trotz eines Auftriebsteils in einer Destillationskolonne wird bei Drücken von etwa 7 bar ein Prozessgas zurückgewonnen, welches immer noch 5 bis 9 Vol% Chlor enthält. Außerdem wird darauf hingewiesen, dass der Schmelzpunkt von festem CO2 (-56,6 C) eine nicht überschreitbare Grenze darstellt.

EP 0 233 773 A offenbart ein Verfahren zur selektiven Abtrennung von Chlor aus dem Produktgas eines katalysatorgestützten HCl-O xidationsprozesses mittels Sauerstoff, das neben Chlor noch Überschuss-Sauerstoff, Stickstoff, Kohlendioxid und HCl enthält, mittels Destillation und Rückführung des von Chlor befreiten Sauerstoffstroms zum HCl-Oxidationsprozess. Das zu trennende Gemisch wird bei einem Verdichtungsdruck von 10 bis 25 kg/cm²

Die im Folgenden beschriebene Erfindung bezieht sich auf eine verbesserte Prozessgasaufarbeitung beispielsweise als Teil eines gesamten Deacon Verfahrens, welches besonders vorteilhaft im Verbund mit einer Isocyanatherstllung betrieben werden kann, da die neue Prozessgasaufarbeitung Verunreinigungen im HCl-Gasstrom aus einer Isocyanatanlage nutzt.

Das neue Verfahren löst insbesondere die Aufgabe der selektiven Entfernung von Chlor aus dem Produkt von HCl-Oxidationsverfahren mittels Sauerstoff und vermeidet die oben genannten Nachteile der aus dem Stand der Technik bekannten Verfahren.

Gegenstand der Erfindung ist ein Verfahren zur selektiven Abtrennung von Chlor aus dem Produktgas eines ggf. katalysatorgestützten HCl-Oxidationsprozesses mittels Sauerstoff, das neben Chlor noch wenigstens Überschuss-Sauerstoff, chemisch inerte Bestandteile, insbesondere Kohlendioxid und Edelgase, und gegebenenfalls HCl enthält, mittels Destillation und Rückführung des von Chlor befreiten Sauerstoffstroms zum HCl-Oxidationsprozess, dadurch gekennzeichnet, dass
die Destillation mittels einer oder mehrerer Destillationskolonnen betrieben wird, die einen Auftriebs- und Abtriebsteil bilden und wobei das zu trennende Gemisch zwischen Auftriebs- und Abtriebsteil der Destillationskolonne zugeführt wird,
dass die Destillation bei einem Druck von 8 bis 30 bar (8000 bis 30000 HPa) und einer Temperatur im Kolonnenkopf von -10°C bis -60°C durchgeführt wird,
dass flüssiges Chlor der Destillationskolonne, insbesondere am Kolonnensumpf entnommen wird, und dass am Kopf der Destillationskolonne eine im Wesentlichen aus Kohlendioxid und Sauerstoff bestehende Mischung anfällt, die zu einem Teil als Rücklauf auf die Destillationskolonne gegeben wird und zum anderen Teil entnommen und in den HCl-Oxidationsprozess zurückgeführt wird.

Bevorzugt ist das der Destillation zugeführte Produktgas vor der Destillation getrocknet.

Ein bevorzugtes Verfahren ist dadurch gekennzeichnet, dass der HCl-Oxidationsprozess ein Deacon - Prozess ist, d.h. eine katalysierte Gasphasenoxidation von HCl mittels Sauerstoff.

Das HCl-Gas aus Isocyanatanlagen enthält typischerweise Verunreinigungen wie einen Überschuss CO aus der Phosgenherstellung, Spuren organischer Lösungsmittel wie Monochlorbenzol oder Dichlorbenzol sowie Spuren von CO₂. Diese Komponenten sind teilweise in einer HCl-Gasreinigung abtrennbar, die verbleibenden Spuren kohlenstoffhaltiger Verbindungen werden unter den Reaktionsbedingungen eines Deacon-Verfahrens (Überschuss Sauerstoff, Temperaturen 300 - 400°C) mit Sauerstoff zu CO₂ oxidiert. Das CO₂ reichert sich in bekannten Verfahren als inertes Gas im Sauerstoff-Recycle-Gasstrom des Deaconprozesses an und muss aus dem Sauerstoff-Kreislauf ausgeschleust werden (Purge).

Bei zu hoher Ausschleusemenge des Sauerstoff-recyclestroms bleibt der CO₂-Gehalt im Recycle-gasstrom niedrig, allerdings gehen dann auch große Mengen Sauerstoff und eventuell andere Komponenten mit dem Purgegasstrom verloren.

Bei zu niedriger Ausschleusemenge reichert sich CO₂ im Recylestrom an und erhöht die Recyclegasmenge und damit den Investitions- und Betriebskostenaufwand für den gesamten Gasweg.

Der CO₂-Gehalt im Recyclegas erlaubt es nach dem erfindungsgemäßen Verfahren in einer Destillationskolonne, die z.B. mit dem gequenchten und getrockneten Produktgas aus einem Deacon Reaktor betrieben wird, das darin enthaltene CO₂ bei einem Druck von 10 - 30 bar und einer Temperatur von etwa -30°C bis - 55°C zu kondensieren und als Rücklauf auf diese Kolonne zu geben. Der energetische Zusatzaufwand zur Erzeugung von Tiefkälte kann dabei durch geeignete grundsätzlich bekannte Kälterückgewinnungsmaßnahmen stark abgemildert werden.

Weiter bevorzugt ist daher eine Variante des Verfahrens, die dadurch gekennzeichnet, dass der Chlorwasserstoff des HCl-Oxidationsprozesses aus einem Isocyanat-Herstellungsverfahren stammt und das gereinigte Chlor in das Isocyanat-Herstellungsverfahren zurückgeführt wird.

Bevorzugt ist ebenfalls eine Variante des Verfahrens, bei der der Chlorwasserstoff des HCl-Oxidationsprozesses aus Chlorierungsverfahren organischer Verbindungen z.B. der Herstellung von chlorierten Aromaten stammt und das im Verfahren gereinigte Chlor in das Chlorierungsverfahren zurückgeführt wird.

Bevorzugt wird die Destillation bei einem Druck von 10 bis 25 bar (10000 bis 25000 HPa) und bei einer Temperatur im Kolonnenkopf von -25°C bis -45°C betrieben.

Die Destillationskolonne entfernt selektiv das gewünschte Produkt Chlor als Sumpfprodukt aus dem trockenen Reaktionsgas. Durch den Rücklauf von flüssigem CO₂ ist der Kopf der Kolonne und damit auch der Sauerstoff-Recyclestrom chlorfrei, er enthält neben Überschuss-Sauerstoff nur noch CO₂ und inerte Bestandteile und kann deswegen grundsätzlich ohne Abgaswäsche in die Atmosphäre abgegeben werden.

In einer besonders bevorzugten Form des Verfahrens besteht bei der Destillation der Sumpf der Destillationskolonne aus flüssigem Chlor und ist im Wesentlichen frei von leichtsiedenden Verbindungen aus der Reihe Sauerstoff, Kohlendioxid, Stickstoff, gegebenenfalls Edelgase und gegebenenfalls Chlorwasserstoff.

In einer ebenfalls besonders bevorzugten Form des Verfahrens besteht die am Kopf der Destillationskolonne anfallende Mischung im Wesentlichen aus Kohlendioxid, Sauerstoff und Chlorwasserstoff, die als Rücklauf auf die Destillationskolonne gegeben wird.

Besonders bevorzugt enthält das am Kopf der Destillationskolonne anfallende Gemisch alle leichtsiedenden Verbindungen aus der Reihe Sauerstoff, Kohlendioxid, Stickstoff, gegebenenfalls Edelgase und gegebenenfalls Chlorwasserstoff und ist im Wesentlichen chlorfrei.

Im Wesentlichen chlorfrei im Sinne der Erfindung bedeutet einen Restchlorgehalt von höchstens 0,001 Vol. % bevorzugt 0,0002 Vol.-%.

Das neue Verfahren setzt in bevorzugter Form einen ausreichend hohen CO₂ Partialdruck voraus, damit am Kopf der Kolonne ein Kondensat aus flüssigem CO₂ erzeugt werden kann. Im Falle des Anfahrens eines vorgelagerten Deacon Prozesses ist daher unter Umständen eine externe Zuspeisung von CO₂ erforderlich. Im Dauerbetrieb stellt sich ein Gleichgewicht bezüglich der CO₂-Konzentration ein, welches durch die ausgeschleuste Purgegasmenge geregelt wird.

Ein besonders bevorzugtes Verfahren ist folglich dadurch gekennzeichnet, dass der Gehalt an Kohlendioxid im Bereich des Ausgangs des Kondensators nach dem Kolonnenkopf der Destillationskolonne, insbesondere auch beim Inbetriebnehmen der der Destillation vorgelagerten HCl-Oxidation im Bereich von 20 bis 70 Vol.-%, besonders bevorzugt 30 bis 50 Vol.%, beträgt. Zur ökonomischen Optimierung kann gemäß einer weiteren bevorzugten Variante zusätzlich noch HCl in die Kolonne eingespeist werden. Die eingespeiste HCl-Menge erhöht den Partialdruck an den leicht kondensierbaren Komponenten CO₂ und HCl im Kopfkondensator der Kolonne und erlaubt damit eine ökonomischere Fahrweise durch Einstellung eines niedrigeren Kolonnendruckes oder einer höheren Kondensationstemperatur oder beides.

Zur Erhöhung der Kondensationstemperatur im Kolonnenkopf und ggf. Erniedrigung des Gesamtdruckes kann in einer insbesondere bevorzugten Ausführung des Verfahrens Chlorwasserstoff-Gas dem Eingangsstrom der Destillationskolonne und/oder zusammen mit den Brüden der Kolonne dem Kopfkondensator der Destillationskolonne zugegeben werden.

Ganz besonders bevorzugt wird bis zu 30 Vol.% des vorgereinigten HCl-Gases des vorgelagerten HCl-Oxidationsprozesses vor der HCl-Oxidation abgezweigt und der Destillation des Produktgemisches der HCl-Oxidation zu gegeben.

In einer besonders bevorzugt Ausführung der Erfindung wird deswegen ein Bypass von gereinigtem HCl-Gas um den Reaktor direkt auf die Destillationskolonne eingerichtet, und zwar sowohl zum Anfahren des Prozesses als auch zum kontinuierlichen Weiterbetrieb. In diesem Falle ist zum Anfahren bei niedrigem CO₂-Gehalt eine externe CO₂-Einspeisung nicht erforderlich. Der Mengenanteil dieses Bypasstroms beträgt bis zu 30 Vol.% der HCl-Gesamtmenge.

Der HCl-Bypasstrom wird vorteilhaft direkt auf den Kopfkondensator der Destillationskolonne gegeben, optional ist auch eine Zuspeisung des HCl-Bypasstromes in den Einlauf der Destillationskolonne möglich.

Im Falle der HCl-Zuspeisung auf den Kopf der Kolonne ist das Recyclegas HCl-haltig, aber immer noch chlorfrei. Die Abgaswäsche des Purgestroms ist dann sehr einfach mit Wasser durchführbar. Die wieder gewonnene wässrige HCl wird insbesondere im Verbund Isocyanatherstellung/Deacon Prozess wieder verwendet.

Wenn größere Mengen HCl in die Destillationskolonne eingespeist werden, kann der Einlaufstrom des trockenen Prozessgases in die Kolonne durchaus HCl-haltig sein. Durch Diese Maßnahme vermindert sich auch der Reinigungsaufwand des Prozessgases in der Quenche.

Der zur ökonomischen Kondensation in der Kolonne benötigte Druck von typischerweise ca. 20 bar kann vorteilhaft im gesamten Gasweg des Prozesses einschließlich des vorgeschalteten Deacon Reaktors genutzt werden. Ein Druck von ca. 20 bar ist für eine Deacon Reaktion vorteilhaft, da durch einen hohen Druck auch der HCl-Umsatz im Reaktor durch Verschiebung des chemischen Gleichgewichtes steigt.

Das z.B. zum Deacon Reaktor rückgeführte Recyclegas des bevorzugten Verfahrens ist chlor- und wasserfrei, so dass wegen des chemischen Gleichgewichts im Deacon Reaktor damit der HCl-Umsatz maximiert werden kann.

In einem ersten Schritt eines bevorzugten Verfahrens, das die Integration des neuen kombinierten Chlor-Reinigungsverfahrens in eine Isocyanat-Herstellung zum Gegenstand hat, erfolgt die Herstellung von Phosgen durch Umsetzung von Chlor mit Kohlenmonoxid. Die Synthese von Phosgen ist hinlänglich bekannt und ist z.B. in Ullmanns Enzyklopädie der industriellen Chemie, 3. Auflage, Band 13, Seite 494-500 dargestellt. Im technischen Maßstab wird Phosgen überwiegend durch Umsetzung von Kohlenmonoxid mit Chlor bevorzugt an Aktivkohle als Katalysator hergestellt. Die stark exotherme Gasphasenreaktion erfolgt typischerweise bei einer Temperatur von mindestens 250°C bis maximal 600°C in der Regel in Rohrbündelreaktoren. Die Abführung der Reaktionswärme kann auf unterschiedliche Weise erfolgen, beispielsweise durch ein flüssiges Wärmetauschmittel, wie z.B. in der Schrift WO 03/072237 A1 beschrieben, oder durch Siedekühlung über einen Sekundärkühlkreislauf unter gleichzeitiger Nutzung der Reaktionswärme zur Dampferzeugung, wie z.B. in der US-A 4764308 offenbart.

Aus dem im ersten Schritt gebildeten Phosgen wird durch Umsetzung mit wenigstens einem organischen Amin oder einem Gemisch aus zwei oder mehreren Aminen in einem nächsten Verfahrensschritt wenigstens ein Isocyanat gebildet. Dieser zweite Verfahrensschritt wird nachfolgend auch als Phosgenierung bezeichnet. Die Umsetzung erfolgt unter Bildung von Chlorwasserstoff als Nebenprodukt, das als Gemisch mit dem Isocyanat anfällt.

Die Synthese von Isocyanaten ist ebenfalls aus dem Stand der Technik grundsätzlich bekannt, wobei in der Regel Phosgen in einem stöchiometrischen Überschuss, bezogen auf das Amin, eingesetzt wird. Üblicherweise findet die Phosgenierung gemäß in der Flüssigphase statt, wobei das Phosgen und das Amin in einem Lösemittel gelöst sein können. Bevorzugte für die Phosgenierung Lösemittel sind chlorierte aromatische Kohlenwasserstoffe, wie Chlorbenzol, o-Dichlorbenzol, p-Dichlorbenzol, Trichlorbenzole, die entsprechenden Chlortoluole oder Chlorxylole, Chlorethylbenzol, Monochlordiphenyl, α- bzw. β-Naphthylchlorid, Benzoesäureethylester, Phthalsäuredialkylester, Diisodiethylphthalat, Toluol und Xylole. Weitere Beispiele für geeignete Lösemittel sind aus dem Stand der Technik grundsätzlich bekannt. Wie außerdem aus dem Stand der Technik, z.B. nach der Schrift WO 96/16028, bekannt, kann als Lösemittel für Phosgen ebenso das gebildete Isocyanat selbst fungieren. In einer anderen, bevorzugten Ausführungsform findet die Phosgenierung, insbesondere geeigneter aromatischer und aliphatischer Diamine, in der Gasphase, d.h. oberhalb des Siedepunktes des Amins, statt. Die Gasphasenphosgenierung ist z.B. in der EP 570 799 A1 beschrieben. Vorteile dieses Verfahrens gegenüber der ansonsten üblichen Flüssigphasenphosgenierung liegen in der Energieeinsparung, bedingt durch die Minimierung eines aufwändigen Lösemittel- und Phosgenkreislaufs.

Als organische Amine eignen sich prinzipiell alle primären Amine mit einer oder mehreren primären Aminogruppen, die mit Phosgen unter Bildung einer oder mehrerer Isocyanate mit einer oder mehreren Isocyanatgruppen reagieren können. Die Amine weisen mindestens eine, bevorzugt zwei, oder gegebenenfalls drei und mehr primäre Aminogruppen auf. So kommen als organische primäre Amine aliphatische, cycloaliphatische, aliphatisch-aromatische, aromatische Amine, Di-und/oder Polyamine in Frage, wie Anilin, Halogen-substituierte Phenylamine, z.B. 4-Chlorphenylamin, 1,6-Diaminohexan, 1-Amino-3,3,5-trimethyl-5-amino-cyclohexan, 2,4-, 2,6-Diaminotoluol oder deren Gemische, 4,4'-, 2,4'- oder 2,2'-Diphenylmethandiamin oder deren Gemische, wie auch höhermolekulare isomere, oligomere oder polymere Derivate der genannten Amine und Polyamine. Weitere mögliche Amine sind aus dem Stand der Technik grundsätzlich bekannt. Bevorzugte Amine für die vorliegende Erfindung sind die Amine der Diphenylmethandiamin-Reihe (monomere, oligomere und polymere Amine), 2,4-, 2,6-Diaminotoluol, Isophorondiamin und Hexamethylendiamin. Bei der Phosgenierung erhält man die entsprechenden Isocyanate Diisocyanatodiphenylmethan (MDI, monomere, oligomere und polymere Derivate), Toluylendiisocyanat (TDI), Hexamethylendiisocyanat (HDI) und Isophorondiisocyanat (IPDI).

Die Amine können mit Phosgen in einer einstufigen oder zweistufigen oder ggf. mehrstufigen Reaktion umgesetzt werden. Dabei ist eine kontinuierliche wie auch diskontinuierliche Betriebsweise möglich.

Wird eine einstufige Phosgenierung in der Gasphase gewählt, so erfolgt die Umsetzung oberhalb der Siedetemperatur des Amins bevorzugt innerhalb einer mittleren Kontaktzeit von 0,5 bis 5 s und bei einer Temperatur von 200 bis 600°C.

Die Phosgenierung in der Flüssigphase wird üblicherweise bei einer Temperatur von 20 bis 240°C und einem Druck von 1 bis ca. 50 bar durchgeführt. Die Phosgenierung in der Flüssigphase kann einstufig oder mehrstufig durchgeführt werden, wobei Phosgen im stöchiometrischen Überschuss eingesetzt werden kann. Dabei werden die Aminlösung und die Phosgenlösung über ein statisches Mischelement vereinigt und anschließend beispielsweise von unten nach oben durch einen oder mehrere Reaktionstürme geführt, wo das Gemisch zum gewünschten Isocyanat ausreagiert. Neben Reaktionstürmen, die mit geeigneten Mischelementen versehen sind, können auch Reaktionsbehälter mit Rührvorrichtung eingesetzt werden. Außer statischen Mischelementen können auch spezielle dynamische Mischelemente Anwendung finden. Geeignete statische und dynamische Mischelemente sind aus dem Stand der Technik grundsätzlich bekannt.

In der Regel wird die kontinuierliche Flüssigphasen-Isocyanatherstellung im industriellen Maßstab zweistufig durchgeführt. Dabei wird in der ersten Stufe im Allgemeinen bei einer Temperatur von maximal 220°C, bevorzugt maximal 160°C aus Amin und Phosgen das Carbamoylchlorid sowie aus Amin und abgespaltenem Chlorwasserstoff Aminhydrochlorid gebildet. Diese erste Stufe ist stark exotherm. In der zweiten Stufe wird sowohl das Carbamoylchlorid zu Isocyanat und Chlorwasserstoff gespalten als auch das Aminhydrochlorid zum Carbamoylchlorid umgesetzt. Die zweite Stufe wird in der Regel bei einer Temperatur von mindestens 90°C, vorzugsweise von 100 bis 240°C, durchgeführt.

Nach der Phosgenierung erfolgt in einem dritten Schritt die Abtrennung der bei der Phosgenierung gebildeten Isocyanate. Dies geschieht dadurch, dass zunächst das Reaktionsgemisch der Phosgenierung in einen flüssigen und einen gasförmigen Produktstrom in einer dem Fachmann grundsätzlich bekannten Weise aufgetrennt wird. Der flüssige Produktstrom enthält im Wesentlichen das Isocyanat bzw. Isocyanatgemisch, das Lösemittel sowie einen geringen Teil an nicht umgesetztem Phosgen. Der gasförmige Produktstrom besteht im Wesentlichen aus Chlorwasserstoffgas, stöchiometrisch überschüssigem Phosgen, sowie geringfügigen Mengen an Lösemittel und Inertgasen, wie zum Beispiel Stickstoff und Kohlenmonoxid. Ferner wird der Flüssigstrom anschließend einer Aufarbeitung zugeführt, vorzugsweise einer destillativen Aufarbeitung, wobei nacheinander Phosgen sowie das Lösemittel für die Phosgenierung abgetrennt werden. Gegebenenfalls erfolgt außerdem eine weitere Aufarbeitung der gebildeten Isocyanate. Dies geschieht beispielsweise, indem das erhaltene Isocyanatprodukt in einer dem Fachmann bekannten Weise fraktioniert wird.

Der bei der Reaktion von Phosgen mit einem organischen Amin erhaltene Chlorwasserstoff enthält im Allgemeinen organische Nebenbestandteile, welche sowohl bei der thermischen katalysierten oder nicht-thermischen aktivierten HCl-Oxidation als auch bei der elektrochemischen Oxidation einer wässrigen Chlorwasserstofflösung gemäß Schritt (c) stören können. Zu diesen organischen Bestandteilen zählen beispielsweise die bei der Isocyanatherstellung eingesetzten Lösungsmittel wie Chlorbenzol, o-Dichlorbenzol oder p-Dichlorbenzol. Wird bei der Elektrolyse eine Gasdiffusionselektrode als Kathode eingesetzt, so kann auch der Katalysator der Gasdiffusionselektrode durch die organischen Verunreinigungen deaktiviert werden. Darüber hinaus können sich diese Verunreinigungen auf dem Stromkollektor ablagern und dadurch den Kontakt zwischen Gasdiffusionselektrode und Stromkollektor verschlechtern, was einen unerwünschten Spannungsanstieg zur Folge hat. Wird zur Elektrolyse der Salzsäure das Diaphragmaverfahren eingesetzt, so können sich die genannten organischen Bestandteile auf den Graphitelektroden und/oder dem Diaphragma ablagern und dadurch ebenfalls die Elektrolysespannung erhöhen.

Dementsprechend erfolgt bevorzugt in einem weiteren Verfahrensschritt die Abtrennung des bei der Phosgenierung erzeugten Chlorwasserstoffs aus dem gasförmigen Produktstrom. Der gasförmige Produktstrom der bei der Abtrennung des Isocyanats erhalten wird, wird so behandelt, dass das Phosgen wieder der Phosgenierung und der Chlorwasserstoff einer elektrochemischen Oxidation zugeführt werden kann.

Die Abtrennung des Chlorwasserstoffs erfolgt bevorzugt zunächst, indem Phosgen aus dem gasförmigen Produktstrom abgetrennt wird. Die Abtrennung des Phosgens gelingt durch Verflüssigung von Phosgen, beispielsweise an einem oder mehreren in Reihe geschalteten Kondensatoren. Die Verflüssigung erfolgt vorzugsweise bei einer Temperatur im Bereich von -15 bis -40°C in Abhängigkeit des eingesetzten Lösemittels. Durch diese Tiefkühlung können außerdem Teile der Lösemittelreste aus dem gasförmigen Produktstrom entfernt werden.

Zusätzlich oder alternativ kann das Phosgen mit einem kalten Lösemittel oder Lösemittel-Phosgen-Gemisch aus dem Gasstrom in einer oder mehreren Stufen ausgewaschen werden. Als Lösemittel hierfür eignen sich beispielsweise die bereits in der Phosgenierung eingesetzten Lösemittel Chlorbenzol und o-Dichlorbenzol. Die Temperatur des Lösemittels oder des Lösemittel-Phosgen-Gemischs hierfür liegt im Bereich von -15 bis -46°C.

Das aus dem gasförmigen Produktstrom abgetrennte Phosgen kann wieder der Phosgenierung zugeführt werden. Der nach Abtrennung des Phosgens und eines Teils des Lösungsmittelrestes erhaltene Chlorwasserstoff kann neben den Inertgasen wie Stickstoff und Kohlenmonoxid noch 0,1 bis 1 Gew.% Lösungsmittel und 0,1 bis 2 Gew.% Phosgen enthalten.

Gegebenenfalls erfolgt anschließend eine Reinigung des Chlorwasserstoffs, um den Anteil an Spuren von Lösungsmittel zu verringern. Dies kann beispielsweise mittels Ausfrieren erfolgen, indem in Abhängigkeit von den physikalischen Eigenschaften des Lösemittels der Chlorwasserstoff zum Beispiel durch eine oder mehrere Kühlfallen geleitet wird.

In einer besonders bevorzugten Ausführungsform der gegebenenfalls vorgesehenen Reinigung des Chlorwasserstoffs werden zwei in Serie geschaltete Wärmetauscher von dem Chlorwasserstoffstrom durchströmt, wobei das abzutrennende Lösemittel in Abhängigkeit des Festpunktes zum Beispiel bei -40°C ausgefroren wird. Die Wärmetauscher werden bevorzugt wechselweise betrieben, wobei im jeweils zuerst durchströmten Wärmetauscher der Gasstrom das zuvor ausgefrorene Lösemittel auftaut. Das Lösemittel kann wieder für die Herstellung einer Phosgenlösung eingesetzt werden. Im nachgeschalteten zweiten Wärmetauscher, der mit einem üblichen Wärmeträgermedium für Kältemaschinen, z.B. eine Verbindung aus der Reihe der Frigene, beaufschlagt ist, wird das Gas bevorzugt unter den Festpunkt des Lösemittels abgekühlt, sodass dieses auskristallisiert. Nach abgeschlossenem Auftau- und Kristallisationsvorgang werden der Gasstrom und der Kühlmittelstrom umgeschaltet, sodass sich die Funktion der Wärmetauscher umkehrt. Der chlorwasserstoffhaltige Gasstrom kann auf diese Weise auf vorzugsweise maximal 500 ppm, besonders bevorzugt maximal 50 ppm, ganz besonders bevorzugt auf maximal 20 ppm Lösemittelgehalt abgereichert werden.

Alternativ kann die Reinigung des Chlorwasserstoffs bevorzugt in zwei in Serie geschalteten Wärmetauschern z.B. gemäß US-A-6 719 957 erfolgen. Bevorzugt wird dabei der Chlorwasserstoff auf einen Druck von 5 bis 20 bar, bevorzugt 10 bis 15 bar, verdichtet und der komprimierte gasförmige Chlorwasserstoff mit einer Temperatur von 20 bis 60°C, bevorzugt 30 bis 50°C, einem ersten Wärmeaustauscher zugeführt. In diesem wird der Chlorwasserstoff mit einem kalten Chlorwasserstoff einer Temperatur von -10 bis -30°C, der aus einem zweiten Wärmetauscher stammt, gekühlt. Dabei kondensieren organische Bestandteile, die einer Entsorgung oder Wiederverwertung zugeführt werden können. Der in den ersten Wärmetauscher geleitete Chlorwasserstoff verlässt diesen mit einer Temperatur von -20 bis 0°C und wird in dem zweiten Wärmetauscher auf eine Temperatur von -10 bis -30°C gekühlt. Das im zweiten Wärmetauscher anfallende Kondensat besteht aus weiteren organischen Bestandteilen sowie geringen Mengen Chlorwasserstoff. Zur Vermeidung eines Chlorwasserstoffverlustes wird das aus dem zweiten Wärmetauscher ablaufende Kondensat einer Abtrenn- und Verdampfereinheit zugeführt. Dies kann beispielsweise eine Destillationskolonne sein, in der aus dem Kondensat der Chlorwasserstoff ausgetrieben und in den zweiten Wärmetauscher zurückgeführt wird. Es ist auch möglich, den ausgetriebenen Chlorwasserstoff in den ersten Wärmetauscher zurückzuführen. Der in dem zweiten Wärmetauscher abgekühlte und von organischen Bestandteilen befreite Chlorwasserstoff wird bei einer Temperatur von -10 bis -30°C in den ersten Wärmetauscher geleitet. Nach Erwärmung auf 10 bis 30°C verlässt der von organischen Bestandteilen befreite Chlorwasserstoff den ersten Wärmetauscher.

In einem ebenso bevorzugten, alternativen Verfahren erfolgt die gegebenenfalls vorgesehene Reinigung des Chlorwasserstoffs von organischen Verunreinigungen, wie Lösemittelreste, an Aktivkohle mittels Adsorption. Dabei wird beispielsweise der Chlorwasserstoff nach Entfernung von überschüssigem Phosgen bei einer Druckdifferenz von 0 bis 5 bar, vorzugsweise von 0,2 und 2 bar, über oder durch eine Aktivkohleschüttung geleitet. Die Strömungsgeschwindigkeit und Verweilzeit wird dabei in einer dem Fachmann bekannten Weise dem Gehalt an Verunreinigungen angepasst. Die Adsorption von organischen Verunreinigungen ist ebenso an anderen geeigneten Adsorptionsmitteln möglich, z.B. an Zeolithen.

In einem weiteren auch bevorzugten, alternativen Verfahren kann für die gegebenenfalls vorgesehene Reinigung des Chlorwasserstoffs aus der Phosgenierung, eine Destillation des Chlorwasserstoffes vorgesehen sein. Diese erfolgt nach Kondensation des gasförmigen Chlorwasserstoffes aus der Phosgenierung. Bei der Destillation des kondensierten Chlorwasserstoffes wird der gereinigte Chlorwasserstoff als Kopfprodukt der Destillation entnommen, wobei die Destillation unter dem Fachmann bekannte, für eine solche Destillation übliche Bedingungen von Druck, Temperatur u.ä. erfolgt.

Der nach den oben dargestellten Verfahren abgetrennte und ggf. gereinigte Chlorwasserstoff kann danach der HCl-Oxidation mit Sauerstoff zugeführt werden.

Die Erfindung wird nachfolgend anhand der Figuren durch die Beispiele, welche jedoch keine Beschränkung der Erfindung darstellen, näher erläutert.

Es zeigen:

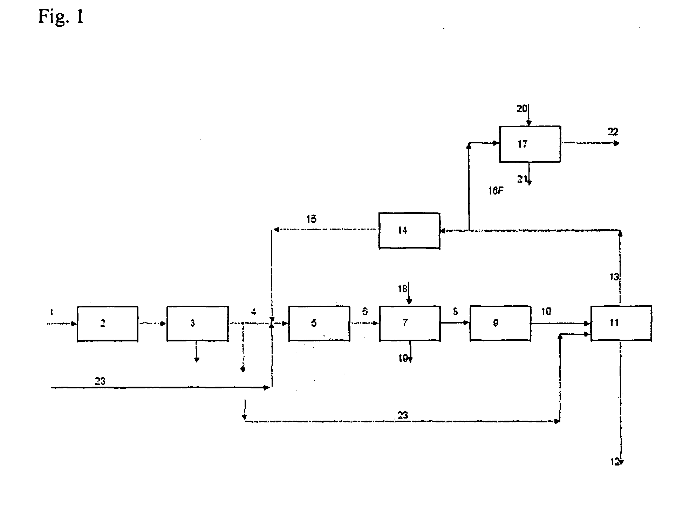

- Fig. 1: ein Verfahrensschema zur Erläuterung des Gesamtverfahrens einschließlich der Destillation
- Fig. 2: ein Schema der Stoffströme betreffend die Destillationskolonne

### Beispiele

### Beispiel 1

HCl-Gas 1 aus einer Isocyanatanlage zur Herstellung Methylendiisocyanat, typischerweise bestehend aus >99 Vol.-% HCl, < 0,2 Vol.-% CO, < 500 vol.ppm organischen Verbindungen (Monochlorbenzol, Dichlorbenzol u.a.) und inerten Spurengasen werden in einem Kompressionssystem 2 auf 22 bar komprimiert.

In einer nachgeschalteten Tieftemperatur-Gasreinigung 3 wird der Hauptanteil der organischen Verunreinigungen aus dem HCl-Gas entfernt.

Die Hauptmenge (85 %) des gereinigten HCl-Gases 4 wird zusammen mit einem Überschuss an Sauerstoff 23 und dem Recyclegas aus der Chlorabtrennung 15 in einen Deacon Reaktor 5 gefahren. In diesem Reaktor wird das HCl-Gas katalytisch bei 370°C zu Chlor oxidiert.

Das Prozessgas 6 aus der Reaktion enthält als Hauptkomponenten Chlor, Sauerstoff, Reaktionswasser sowie nicht umgesetztes HCl-Gas, Kohlendioxid und inerte Gase.

Das heiße Prozessgas wird in eine geeignete Quenche 7 gefahren, in der unter Absenkung der Temperatur auf ca. 40 - 90°C das Reaktionswasser zusammen mit dem Großteil der nicht umgesetzten HCl als wässrige konzentrierte HCl-Lösung auskondensiert.

Das feuchte, noch HCl enthaltende Prozessgas 8 wird in einer Gastrocknung 9 mit konzentrierter Schwefelsäure als Trocknungsmedium getrocknet.

Das getrocknete Prozessgas 10 wird nach Kühlung in eine Destillationskolonne 11 mit Auftriebs- und Abtriebsteil gefahren. In der bei 20 bar Kopfdruck betriebenen Kolonne kondensiert am Kopf bei ca. -32°C ein flüssiges Gemisch aus CO₂, HCl und geringen Anteilen anderer Komponenten wie Sauerstoff und inerten Gasen, welches als Rücklauf auf die Kolonne gegeben wird. Dadurch wird der Kopf der Kolonne und auch das dort erzeugte sauerstoffhaltige Recyclegas 13 absolut chlorfrei.

Im Sumpf 12 der Kolonne wird leichtsiederfreies flüssiges Chlor abgezogen und kann in der nicht gezeichneten Isocyanatanlage wieder eingesetzt werden.

Die übrige Menge (15%) des gereinigten HCl-Gases aus der Gasreinigung 3 wird als Bypass 23 um die Deacon-Reaktion zusammen mit den Brüden aus der Destillationskolonne 10 direkt auf den Kopfkondensator der Kolonne gefahren.

Das Recyclegas 13, bestehend aus 40 Vol.-% Sauerstoff, 36 Vol.-% CO₂, 20 Vol.-% HCl und 4 Vol.-% inerten Bestandteilen wird über einen Kompressor 14 zurück in den Deacon Reaktor 5 gefahren.

Die sich im Lauf der Zeit im Recyclegas anreichernden Nebenprodukte wie CO₂ und andere Inerte werden aus dem Recyclegas 16 ausgeschleust und in einer Wasserwäsche 17 von HCl gereinigt. Die ablaufende verdünnte wässrige Salzsäure 21 wird im Prozessverbund von Isocyanatanlage und Deacon Prozess an anderer Stelle wieder verwendet.

Das chlor- und HCl-freie, aus 50 Vol.-% Sauerstoff, 45 Vol.-% CO2 und 5 Vol.-% Inerten bestehende Abgas 22 wird in die Atmosphäre abgegeben.

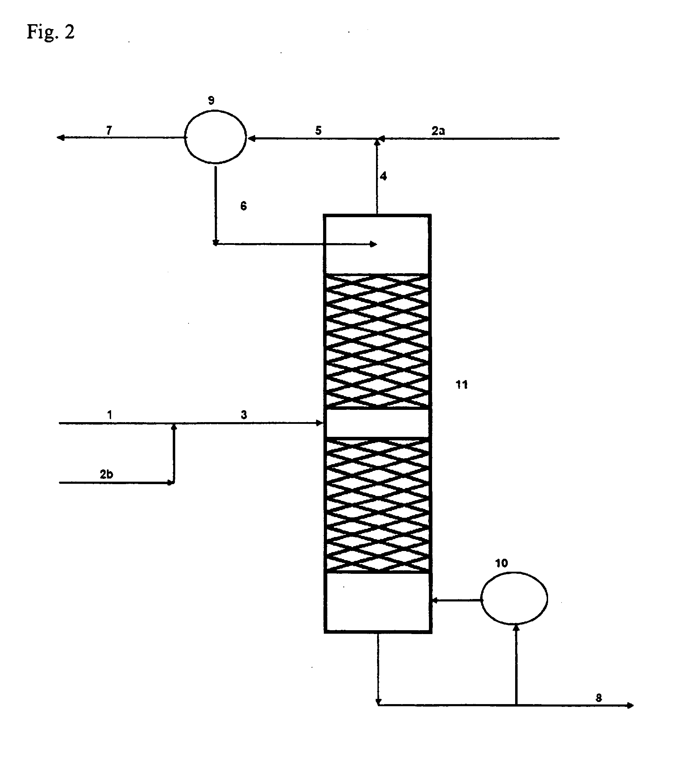

Betrieb der Destillationskolonne Beispiel 1 (Fig. 2):

Das getrocknete Prozessgas aus dem Deacon Reaktor 1, bestehend aus 47 Vol.-% Cl₂, 31 Vol.-% O₂, 19 Vol.-% CO₂, 2 Vol.-% inerten Gasen sowie 1 Vol.-% HCl, wird in eine Destillationskolonne 11 mit Auftriebs- und Abtriebsteil gefahren. Die Kolonne wird bei einem Kopfdruck von 20 bar und einer Kopftemperatur von -32 C betrieben, die Sumpftemperatur liegt bei +64 C.

Am Sumpf der Kolonne wird das reine, flüssige Chlor 8 ausgeschleust und teilweise über einen Verdampfer 10 zurück in die Kolonne 11 gegeben.

Die Leichtsieder Sauerstoff, HCl, CO₂ und Inerte schlagen am Kopf der Kolonne 4 durch und werden dort mit dem HCl-Bypassstrom aus der HCl-Reinigung 2a gemischt und einem Kondensator 9 zugeführt. Die HCl-Bypassmenge beträgt 15 % der gesamten zu oxidierenden HCl-Menge.

In dem Kondensator 9 werden die unter diesen Druck- und Temperaturbedingungen kondensierbaren Gase auskondensiert. Das Kondensat 6, bestehend aus 50 Gew.-% CO₂, 38 Gew.-% HCl und 12 Gew.-% Sauerstoff, wird als Rücklauf auf die Kolonne gegeben. Die nicht im Kondensator kondensierbaren Bestandteile werden als Sauerstoff-Recyclestrom 7, bestehend aus 40 Vol.-% O₂, 36 Vol.-% CO₂, 20 Vol.-% HCl sowie 4 Vol.-% Inerten, zurück auf den Deacon Reaktor gefahren.

### Beispiel 2 (s. Fig. 2):

Es wird wie in Beipiel 1 verfahren, jedoch wird der HCl Bypassstrom 2b nicht auf den Kopfkondensator 9, gefahren sondern zusammen mit dem getrockneten Prozessgas 1 in den Einlauf der Kolonne.

## Patentansprüche

1. Verfahren zur selektiven Abtrennung von Chlor aus dem Produktgas eines ggf. katalysatorgestützten HCl-Oxidationsprozesses mittels Sauerstoff, das neben Chlor noch wenigstens Überschuss-Sauerstoff, chemisch inerte Bestandteile, insbesondere Kohlendioxid und gegebenenfalls Edelgase, und gegebenenfalls HCl enthält, mittels Destillation und Rückführung des von Chlor befreiten Sauerstoffstroms zum HCl-Oxidationsprozess, **dadurch gekennzeichnet, dass**
die Destillation mittels einer oder mehrerer Destillationskolonnen betrieben wird, die einen Auftriebs- und Abtriebsteil bilden und wobei das zu trennende Gemisch zwischen Auftriebs- und Abtriebsteil der Destillationskolonne zugeführt wird,
dass die Destillation bei einem Druck von 8 bis 30 bar (8000 bis 30000 HPa) und einer Temperatur im Kolonnenkopf von -10°C bis -60°C durchgeführt wird,
dass flüssiges Chlor in der Destillationskolonne am Kolonnensumpf entnommen wird, und dass am Kopf der Destillationskolonne eine im wesentlichen aus Kohlendioxid und Sauerstoff bestehende Mischung anfällt, die zu einem Teil als Rücklauf auf die Destillationskolonne gegeben wird und zum anderen Teil entnommen und dem HCl- , Oxidationsprozess zugeführt wird.

2. Verfahren nach Anspruch 1, **dadurch gekennzeichnet, dass** das der Destillation zugeführte Produktgas getrocknet ist.

3. Verfahren nach Anspruch 1 oder 2, **dadurch gekennzeichnet, dass** der HCl-Oxidationsprozess ein Deacon - Prozess ist.

4. Verfahren nach wenigstens einem der Ansprüche 1 bis 3, **dadurch gekennzeichnet, dass** der Chlorwasserstoff des HCl-Oxidationsprozesses aus einem Isocyanat-Herstellungsverfahren stammt und das gereinigte Chlor in das Isocyanat-Herstellungsverfahren zurückgeführt wird.

5. Verfahren nach wenigstens einem der Ansprüche 1 bis 3, **dadurch gekennzeichnet, dass** der Chlorwasserstoff des HCl-Oxidationsprozesses aus einem Chlorierungsverfahren organischer Verbindungen von chlorierten Aromaten stammt und das gereinigte Chlor in das Chlorierungsverfahren zurückgeführt wird.

6. Verfahren nach einem der Ansprüche 1 bis 5, **dadurch gekennzeichnet, dass** die Destillation bei einem Druck von 10 bis 25 bar (10000 bis 25000 HPa) und bei einer Temperatur im Kolonnenkopf von -25°C bis -45°C betrieben wird.

7. Verfahren nach einem der Ansprüche 1 bis 6, **dadurch gekennzeichnet, dass** bei der Destillation der Sumpf der Destillationskolonne aus flüssigem Chlor besteht und im Wesentlichen frei von leichtsiedenden Verbindungen aus der Reihe Sauerstoff, Kohlendioxid, Stickstoff, gegebenenfalls Edelgase und gegebenenfalls Chlorwasserstoff ist.

8. Verfahren nach einem der Ansprüche 1 bis 7, **dadurch gekennzeichnet, dass** die am Kopf der Destillationskolonne anfallende Mischung im Wesentlichen aus Kohlendioxid, Sauerstoff und Chlorwasserstoff besteht, die als Rücklauf auf die Destillationskolonne gegeben wird.

9. Verfahren nach einem der Ansprüche 1 bis 8, **dadurch gekennzeichnet, dass** das am Kopf der Destillationskolonne anfallende Gemisch alle leichtsiedenden Verbindungen aus der Reihe Sauerstoff, Kohlendioxid, Stickstoff, gegebenenfalls Edelgase und gegebenenfalls Chlorwasserstoff enthält und im Wesentlichen chlorfrei ist.

10. Verfahren nach einem der Ansprüche 1 bis 9, **dadurch gekennzeichnet, dass** zur Erhöhung der Kondensationstemperatur im Kolonnenkopf zusätzlich Chlorwasserstoff-Gas dem Eingangsstrom der Destillationskolonne und/oder zusammen mit den Brüden der Kolonne dem Kopfkondensator der Destillationskolonne zugegeben wird.

11. Verfahren nach Anspruch 10, **dadurch gekennzeichnet, dass** bis zu 30 Vol.% des vorgereinigten HCl-Gases des vorgelagerten HCl-Oxidationsprozesses vor der HCl-Oxidation abgezweigt und der Destillation des Produktgemisches der HCl-Oxidation zu gegeben wird.

12. Verfahren nach einem der Ansprüche 1 bis 11, **dadurch gekennzeichnet, dass** der Gehalt an Kohlendioxid im Bereich des Ausgangs des Kondensators nach dem Kolonnenkopf der Destillationskolonne, insbesondere auch beim Inbetriebnehmen der der Destillation vorgelagerten HCl-Oxidation im Bereich von 20 bis 70 Vol.-%, bevorzugt 30 bis 50 Vol.-%, beträgt.

## Claims

1. Process for selectively removing chlorine from the product gas of an optionally catalyst-supported HCl oxidation process by means of oxygen, said gas comprising, as well as chlorine, at least excess oxygen, chemically inert constituents, especially carbon dioxide and optionally noble gases, and optionally HCl, by means of distillation and recycling of the stream of oxygen, freed from chlorine, to the HCl oxidation process, **characterized in that** the distillation is operated by means of one or more distillation columns which form a rectifying section and stripping section, where the mixture to be separated is supplied between the rectifying section and the stripping section of the distillation column,
**in that** the distillation is carried out under a pressure of 8 to 30 bar (8000 to 30 000 hPa) and at a temperature at the column top of -10°C to -60°C,
**in that** liquid chlorine is removed at the bottom in the distillation column,
and **in that** a mixture consisting substantially of carbon dioxide and oxygen is obtained at the top of the distillation column, part of this mixture being applied as reflux to the distillation column, and the other part being removed and supplied to the HCl oxidation process.

2. Process according to Claim 1, **characterized in that** the product gas supplied to the distillation is dried.

3. Process according to Claim 1 or 2, **characterized in that** the HCl oxidation process is a Deacon process.

4. Process according to at least one of Claims 1 to 3, **characterized in that** the hydrogen chloride in the HCl oxidation process originates from an isocyanate preparation process and the purified chlorine is recycled to the isocyanate preparation process.

5. Process according to at least one of Claims 1 to 3, **characterized in that** the hydrogen chloride in the HCl oxidation process originates from a process for chlorination of organic compounds from chlorinated aromatics and the purified chlorine is recycled to the chlorination process.

6. Process according to any of Claims 1 to 5, **characterized in that** distillation is operated under a pressure of 10 to 25 bar (10 000 to 25 000 hPa) and at a temperature at the column top of -25°C to -45°C.

7. Process according to any of Claims 1 to 6, **characterized in that** during the distillation the bottom in the distillation column consists of liquid chlorine and is substantially free from low-boiling compounds from the series consisting of oxygen, carbon dioxide, nitrogen, optionally noble gases and optionally hydrogen chloride.

8. Process according to any of Claims 1 to 7, **characterized in that** the mixture obtained at the top of the distillation column consists substantially of carbon dioxide, oxygen and hydrogen chloride and is applied as reflux to the distillation column.

9. Process according to any of Claims 1 to 8, **characterized in that** the mixture obtained at the top of the distillation column comprises all low-boiling compounds from the series consisting of oxygen, carbon dioxide, nitrogen, optionally noble gases and optionally hydrogen chloride and is substantially chlorine-free.

10. Process according to any of Claims 1 to 9, **characterized in that** hydrogen chloride gas additionally is added, for the purpose of increasing the condensation temperature at the top of the column, to the entering stream of the distillation column and/or is added together with the vapours from the column to the top condenser of the distillation column.

11. Process according to Claim 10, **characterized in that** up to 30% by volume of the prepurified HCl gas from the upstream HCl oxidation process is diverted prior to HCl oxidation and is added to the distillation of the product mixture from the HCl oxidation.

12. Process according to any of Claims 1 to 11, **characterized in that** the amount of carbon dioxide in the region of the outlet of the condenser after the top of the distillation column, and also, in particular, during the start-up of the HCl oxidation upstream of the distillation, is in the range from 20% to 70% by volume, preferably 30% to 50% by volume.

## Revendications

1. Procédé pour la séparation sélective de chlore d'un gaz de produits provenant d'un procédé d'oxydation de HCl le cas échéant soutenu par un catalyseur au moyen d'oxygène, qui contient encore, outre du chlore, au moins de l'oxygène en excès, des constituants chimiquement inertes, en particulier du dioxyde de carbone et le cas échéant des gaz nobles, et le cas échéant du HCl, par distillation et recyclage du flux d'oxygène libéré du chlore dans le procédé d'oxydation de HCl, **caractérisé en ce que**
- la distillation est réalisée au moyen d'une ou de plusieurs colonnes de distillation, qui forment une partie d'enrichissement et une partie d'épuisement et où le mélange à séparer est alimenté entre la partie d'enrichissement et la partie d'épuisement de la colonne de distillation,
- la distillation est réalisée à une pression de 8 à 30 bars (8000 à 30 000 HPa) et à une température en tête de colonne de -10°C à -60°C,
- le chlore liquide est prélevé dans la colonne de distillation dans le fond de la colonne,
- et en tête de la colonne de distillation est produit un mélange essentiellement constitué de dioxyde de carbone et d'oxygène, qui est introduit d'une part comme reflux sur la colonne de distillation et d'autre part prélevé et alimenté dans le procédé d'oxydation de HCl.

2. Procédé selon la revendication 1, **caractérisé en ce que** le gaz de produits introduit dans la distillation est séché.

3. Procédé selon la revendication 1 ou 2, **caractérisé en ce que** le procédé d'oxydation de HCl est un procédé de Deacon.

4. Procédé selon au moins l'une quelconque des revendications 1 à 3, **caractérisé en ce que** le chlorure d'hydrogène du procédé d'oxydation de HCl provient d'un procédé de préparation d'isocyanate et le chlore purifié est recyclé dans le procédé de préparation d'isocyanate.

5. Procédé selon au moins l'une quelconque des revendications 1 à 3, **caractérisé en ce que** le chlorure d'hydrogène du procédé d'oxydation de HCl provient d'un procédé de chloration de composés organiques d'aromatiques chlorés et le chlore purifié est recyclé dans le procédé de chloration.

6. Procédé selon l'une quelconque des revendications 1 à 5, **caractérisé en ce que** la distillation est réalisée à une pression de 10 à 25 bars (10 000 à 25 000 HPa) et une température en tête de colonne de -25°C à -45°C.

7. Procédé selon l'une quelconque des revendications 1 à 6, **caractérisé en ce que** lors de la distillation le fond de la colonne de distillation est constitué de chlore liquide et est essentiellement exempt de composés à bas point d'ébullition de la série oxygène, dioxyde de carbone, azote, le cas échéant gaz nobles et le cas échéant chlorure d'hydrogène.

8. Procédé selon l'une quelconque des revendications 1 à 7, **caractérisé en ce que** le mélange formé en tête de la colonne de distillation est essentiellement constitué de dioxyde de carbone, d'oxygène et de chlorure d'hydrogène, qui est introduit comme reflux sur la colonne de distillation.

9. Procédé selon l'une quelconque des revendications 1 à 8, **caractérisé en ce que** le mélange formé en tête de la colonne de distillation contient tous les composés à bas point d'ébullition de la série oxygène, dioxyde de carbone, azote, le cas échéant gaz nobles et le cas échéant chlorure d'hydrogène et est essentiellement exempt de chlore.

10. Procédé selon l'une quelconque des revendications 1 à 9, **caractérisé en ce que** pour augmenter la température de condensation dans la tête de colonne, on introduit en outre du chlorure d'hydrogène gazeux dans le flux d'entrée de la colonne de distillation et/ou ensemble avec les vapeurs de la colonne dans le condensateur de tête de la colonne de distillation.

11. Procédé selon la revendication 10, **caractérisé en ce qu'**on dévie jusqu'à 30% en volume du HCl gazeux purifié au préalable du procédé d'oxydation de HCl disposé en amont avant l'oxydation de HCl et on l'introduit dans la distillation du mélange de produits de l'oxydation de HCl.

12. Procédé selon l'une quelconque des revendications 1 à 11, **caractérisé en ce que** la teneur en dioxyde de carbone au niveau de la sortie du condensateur après la tête de la colonne de distillation, en particulier également lors de la mise en service de l'oxydation de HCl disposée en amont de la distillation est située dans la plage de 20 à 70% en volume, de préférence de 30 à 50% en volume.
